# EUROPEAN PATENT SPECIFICATION

(11) **EP 1 698 500 B1**
(45) Date of publication and mention of the grant of the patent: **06.02.2008**
(21) Application number: 05380037.1
(22) Date of filing: 01.03.2005
(51) Int. Cl.: B60J 3/02

(54) **Sun visor assembly**
Sonnenblendenanordnung
Ensemble paresoleil

(43) Date of publication of application: 06.09.2006
(73) Proprietor: GRUPO ANTOLIN-INGENIERIA, S.A., 09007 Burgos (ES)
(72) Inventor: Drui, Philippe, 57510 Saint-Jean-Rohrbach (FR); Georges, Patrick, 88120 Vagney (FR)
(74) Representative: Carpintero Lopez, Francisco

(56) References cited:
- DE-C1- 19 951 713
- US-B1- 6 220 644

## Description

### FIELD OF THE INVENTION

The invention relates to sun visors for vehicles and, especially, to longitudinally displaceable sun visors, that is, to sun visors that are axially displaceable with regard to their pivot rod.

### STATE OF THE ART

Sun visors for motor vehicles are elements situated inside the vehicle, normally in correspondence with the windshield, so as to protect the driver and/or passenger(s) from incoming sunlight. The sun visors are normally pivotable around a pivot rod, between a storage position (in which the sun visor is often substantially parallel with and adjacent to the headliner of the vehicle) and an in-use position in which the sun visor protects the eyes of the driver or the passenger from incoming sunlight, for example, so as to prevent the driver from being dazzled by the light when driving. Often, the pivot rod is arranged so that it can pivot between a windshield position, in which the sun visor protects against light coming in through the windshield, and a side window position in which it protects the driver or passenger from light coming in through a side window.

For practical reasons, the dimensions of the sun visors are normally rather limited, for example, in order to avoid interference between the sun visor and other elements of the vehicle. However, in order to provide for an adequate protection against light coming from different angles, the sun visor can be made extendible, so that its effective surface can be modified in accordance with the driver's or passenger's need, and/or the sun visor can be arranged to be longitudinally or axially displaceable, that is, axially displaceable with regard to the pivot rod. The invention relates to such axially displaceable sun visors.

Axially displaceable sun visors are known from, for example, US-A-4925233. This document discloses a sun visor with a body element comprising a clearance for housing a torque fitting attached to the pivot rod. The sun visor further includes a pair of guide blocks secured adjacent opposite ends of reinforced longitudinal ribs defining the clearance and guide rods anchored between the opposite guide blocks to define a sliding guiding support for the torque fitting during the axial displacement of the sun visor. The guiding system of this sun visor is rather complex; a complex structure is likely to imply high manufacturing costs.

US-A-6024399 and US-A-5653490 disclose improved axially displaceable sun visors. In these documents, the axial displacement of the sun visor body is achieved by means of a sliding element, attached to the pivot rod and arranged to slide in a tube provided in correspondence with one longitudinal edge of the sun visor body. Both US-A-6024399 and US-A-5653490 suggest the use of metallic tubes attached to a substantially plastic main body element. In US-A-5653490*,* the tube is fixed to the sun visor by means of adhesive while in US A-6024399 the connection between the tube and the body of the sun visor is achieved by a covering cap enclosing the tube and provided with extension strips which become welded to the body during moulding. Now, the use of separate metallic parts imply certain drawbacks, such as their weight, the costs of the material, the costs involved with recycling the parts and the rather complex process of assembling the metal parts to the plastic main body element.

JP-A-05-286362 discloses also a sun visor including a separate guide tube provided in the upper corner of the sun visor body. This tube is attached to a bearing body fixed to the reinforcement wires of the sun visor body. The use of additional pieces increases weight and cost and requires a complex process of assembly of the sun visor.

DE-A-10017047 discloses another sun visor including what appears to be a separate tube or similar element arranged to provide a channel in which a sliding element or similar, attached to a pivot rod, can slide, thus allowing the sun visor to be axially displaceable with regard to the pivot rod. In this document the separate guide tube is embedded in the body of the sun visor and thus requires a complex production system.

US6220644 discloses a sun visor assembly comprising a main body element, with on the top edge a first channel defining portion that in combination with a cap element establishes a channel around a sliding element, and with a pivot rod.

An objective of the invention is to provide for a simple structure that allows for an easy assembly of sun visors, using low-cost materials and components.

### DESCRIPTION OF THE INVENTION

A first aspect of the invention relates to a sun visor assembly for vehicles, comprising:
a main body element corresponding to a sunshade portion of the sun visor (that is, to the portion that provides for most of the shading surface of the sun visor; the main body element can provide a support including a grid portion arranged to be covered by a suitable opaque or translucent covering and, optionally, including a frame or similar for receiving a mirror housing or other equipments to be incorporated into the sun visor), said main body element comprising, in correspondence with a longitudinal top edge thereof, a first channel defining portion. This first channel defining portion can comprise a bottom portion substantially corresponding to the top edge of the main body element, and two (optionally substantially parallel) walls extending from said edge and defining, between them, a channel for receiving a part of the sliding element.

In accordance with the invention, said sun visor assembly further comprises a cover or cap element connectable to said main body element in correspondence with said first channel defining portion. The cap element is configured so that said cap element, in combination with said first channel defining portion, establishes a channel for housing (for example, in a close-fitting manner) a sliding element connectable or connected to a pivot rod, so that said sliding element can slide in said channel, between a first position (which can correspond to a minimum axial displacement of the main body element with regard to the pivot rod) and a second position (which can correspond to a maximum axial displacement of the main body element with regard to the pivot rod).

Thus, a simple structure is achieved, which allows simple components, easily obtainable by, for example, moulding, to be used for assembling a sun visor. Suitable plastic materials can be used for moulding both the main body element and the cap element. Of course, also other materials can be used, for example, the cap element can be made of a metal such as aluminium.

For assembling the sun visor, the sliding element can, for example, be positioned in correspondence with the first channel defining portion of the main body element, whereafter the cap element can simply be attached (by some kind of attachment means, such as by clip fitting/coupling or similar) to the main body element, whereby the sliding element will remain inside the channel defined and delimited by the main body element and the cap element. The pivot rod can then be connected to the sliding element, for example, after attaching a cover material or lining. The whole assembly comprising the main body element, the cap element and the sliding element housed inside the channel defined by the main body element and the cap element, can be covered by a suitable cover material or lining, so as to produce an aesthetically attractive product, having one single opening (in correspondence with the channel) for insertion of the pivot rod into the channel and further into the sliding element, so as to mount the sliding element on the pivot rod so that it remains axially fixed on said pivot rod, with the capability of pivoting around said pivot rod.The channel defined by the main body element and the cap element can be a substantially tubular channel, the cross-section of which can have a shape similar to the shape of the cross-section of the sliding element, so that the sliding element can slide along the channel in a close-fitting manner, and whereby a pivoting movement of the main body element with regard to the pivot rod will force the sliding element (housed in the channel) to pivot around the pivot rod, whereby a suitable design of the sliding element will make it possible to set the main body element in a desired angular position with regard to the pivot rod.

The skilled person will easily be able to design a suitable way of connecting the sliding element to the pivot rod so as to achieve an axially fixed coupling, with the sliding element able to pivot around the pivot rod. A suitable design of the sliding element, for example, involving spring means arranged to exert pressure on the pivot rod, will provide for a certain minimum force to be necessary for pivoting the sliding element around the pivot rod, whereby the user can set the sun visor in a suitable angular position, in which it will remain until it is moved therefrom by the user. Practical examples of such couplings between sliding elements and pivot rods of sun visors are well known in the art and need not to be further discussed herein.

The main body element can be made up of a single moulded element, for example, by a plastic element that can easily be produced by injection moulding.

The cap element can have a substantially U-shaped cross section (and thus have an open longitudinal portion arranged to be placed in correspondence with the first channel defining portion of the main body element) and longitudinal end portions arranged to be attached to the main body element. That is, the cap element can have a very simple configuration, thus further reducing the costs involved. The cap element can be made small if compared to the general size of the main body element, thus making assembly easier, as it is often easier to attach a small object to a large object, than to couple two large objects to each other.

The cap element can be arranged to be attached to the main body element by clip fitting (clip coupling) or by other simple mechanical coupling means. Thus, no welding or gluing is necessary. For example, the cap element can comprises a plurality of openings and/or recesses arranged along free longitudinal edges of said cap element and arranged to receive corresponding projections forming part of the main body element, for clip fitting the cap element to the main body element. As an alternative or as a complement, the cap element can (also) be provided with such projections arranged to fit into corresponding openings and/or recesses in the main body element.

The cap element can be made up of a single moulded element. It can be, for example, a plastic element or an aluminium element. Thus, it can easily be produced by, for example, injection moulding.

The first channel defining portion of the main body element can include a longitudinal groove arranged to receive a rib of the sliding element, thus providing for improved fitting and guided sliding of the sliding element in the channel.

The first channel defining portion can comprise two projections or tab elements provided at opposite ends of the first channel defining portion and arranged to abut against respective open lateral ends of the cap element for closing said ends (thus defining a substantially closed channel, along which the sliding element can be displaced). At least a first one of said tab elements can have a through hole for receiving the pivot rod. Also the cap element can have closed end portions, at least one of which is then provided with a through hole for receiving the pivot rod.

The first channel defining portion of the main body element can comprise two stop elements (consisting in suitable projections, configurations or other means) arranged to establish limit positions for the axial displacement of the sun visor. In said limit positions, these stop elements can abut against the sliding element, thus preventing it from moving further in the corresponding direction. As the amount of axial displacement of the sun visor will thus be determined by these stop elements which can be integrally formed (for example, moulded) with the main body element, the same cap element can actually be used for different types of sun visor assemblies, even for sun visor assemblies featuring different amounts of maximum axial displacement. This can be an advantage from a logistic point of view, thus further reducing costs.

The sun visor assembly can further include the sliding element. Said sliding element can comprise a first (for example, moulded, for example, plastic) part provided with at least one opening for receiving the pivot rod so as to allow the sliding element to be (optionally releasably) connected to said pivot rod by means of inserting said pivot rod into said at least one opening.

Said sliding element can further comprise a rib or similar projecting portion, arranged, for example, at a lower portion of said first part (and optionally integrally moulded with said part), said rib being arranged to be inserted in a groove in the channel defining portion of the main body element, or in a groove in the cap element, thus providing for improved fitting of the sliding element in the channel, and for an improved guided movement of the sliding element along the channel.

The sliding element can further comprise at least one spring element arranged to exert a force against the main body element and/or against the cap element, so as to require a certain minimum force to be exerted by a user for sliding the sliding element along the channel. Thus, selecting said force adequately, the sun visor can be prevented from moving along the pivot rod unless the user (driver, passenger) acts on the sun visor. Thus, accidental displacement, for example, due to vibrations of the vehicle, etc., can be, at least partially, prevented. Also, an adequate resistance felt by the user when trying to displace the sun visor along the pivot rod can give the user a positive impression of the quality of the sun visor.

The sliding element can further comprise a rod pressure element arranged to exert pressure on the rod when the sliding element is mounted on the rod, so as to allow the sliding element and the main body element to be selectively positioned and retained in one of a plurality of angular positions with regard to the pivot rod, by means of pivoting the sliding element around the pivot rod to a corresponding angular position. As the sliding element is housed in the channel defined by the main body element and the cap element, such pivoting can be achieved by applying torque to the main body element. By means of a suitable choice of the design, material and dimensions of the rod pressure element and of the rod, a certain minimum torque will be necessary in order to angularly displace the main body element from its position. Also, a suitable design of the sliding element, of the rod pressure element and of the rod itself makes it possible to define one or more pre-established positions into which the sliding element (together with the rest of the sun visor assembly) can "snap" when pivoting the main body element around the pivot rod.

The rod pressure element can be a metallic clip.

The sun visor assembly can further comprise the pivot rod, which can be arranged to allow the sun visor to be further pivoted between a position aligned with the windscreen and a position aligned with a side window of the vehicle, in a conventional manner.

Another aspect of the invention relates to a sun visor, made up of a sun visor assembly in accordance with any of the preceding claims, with the different components adequately assembled. The main body element can comprise a grid-shaped portion (for example, integrally moulded with the rest of the main body element) covered by a non-translucent material so as to provide for a main sunshade portion of the sun visor.

### BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but just as an example of how the invention can be embodied. The drawings comprise the following figures:
Figure 1 is a fragmentary exploded perspective view of a sun visor assembly in accordance with a preferred embodiment of the invention.
Figure 2 is a partial perspective view of the main body element.
Figure 3 is a perspective view of the sliding element with the metallic clip that constitutes the rod pressure element.
Figure 4 is a perspective view of the sliding element without said metallic clip.
Figure 5 is a partial perspective view of the cap element clip-fitted to the main body element.
Figure 6 is a schematic perspective view of the sliding element mounted on the pivot rod.
Figure 7 is a perspective view of the assembly (with the cap element removed) in a minimum axially extended position with regard to the pivot rod.
Figure 8 is a perspective view of the assembly (with the cap element removed) close to its maximum axially extended position with regard to the pivot rod.
Figure 9 is a perspective view of an alternative embodiment of the cap element, with closed ends.
Figure 10 is a longitudinal vertical cross section of the assembly.

### DESCRIPTION OF A PREFERRED EMBODIMENT OF THE INVENTION

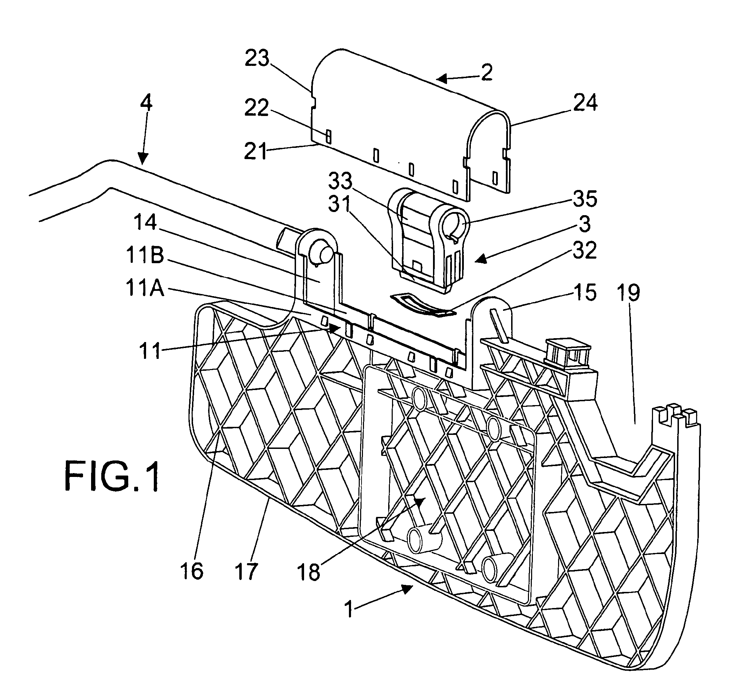

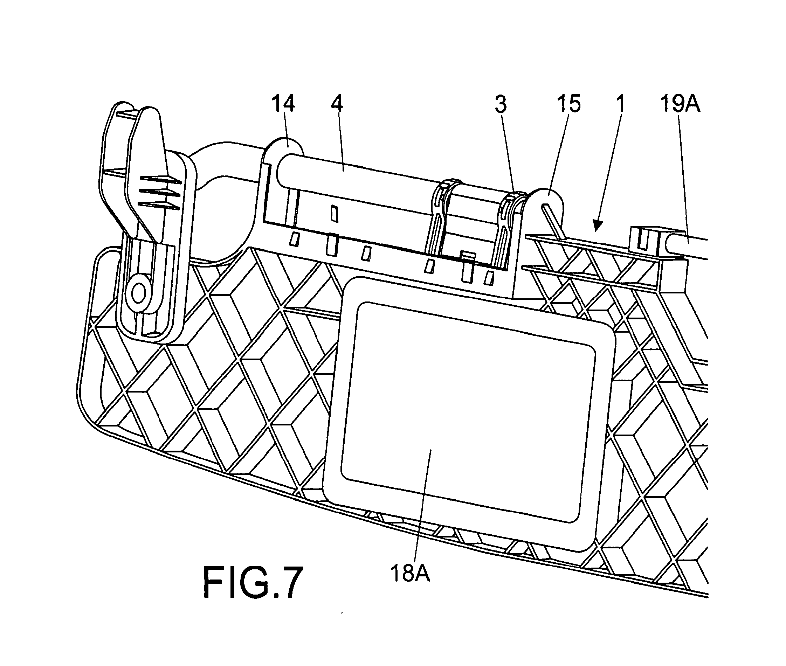

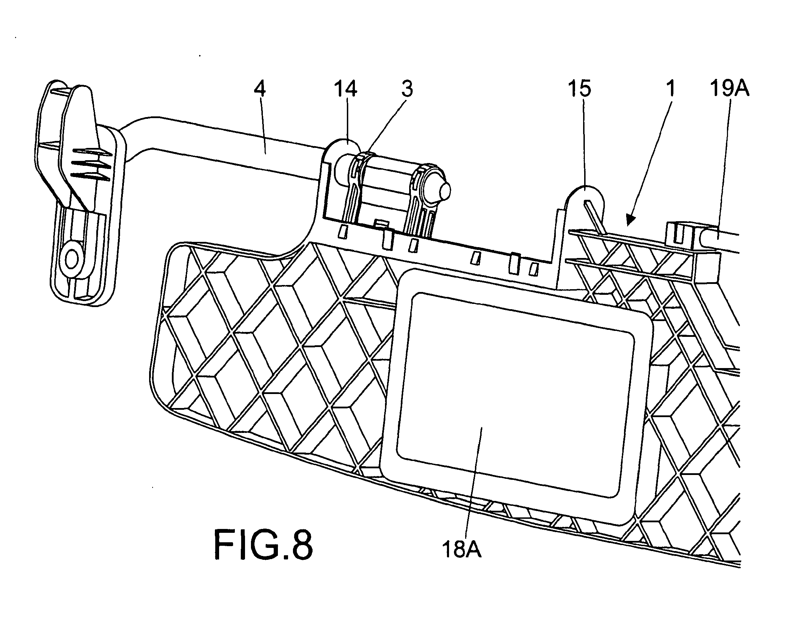

Figure 1 shows a preferred embodiment of the invention, according to which the sun visor assembly comprises a main body element 1, basically configured as an elongated frame having a frame portion 17 delimiting a grid 16 which, in the final product, is covered by an opaque or non-translucent cover or lining (and, optionally, also by padding or cushioning materials), so as to define a sunshade portion of the sun visor. The main body element can further comprise a recess 19 housing a bearing pin 19A (cf. figures 7, 8 and 10) or similar means (not shown), which can be snapped into the corresponding bearing means in correspondence with the headlining of the vehicle, in a conventional manner. In correspondence with the grid, an additional frame portion can be provided to constitute a housing 18 for a mirror 18A (cf. figures 7 and 8). In accordance with this embodiment of the invention, the main body element is a single piece plastic element produced by injection moulding.

In accordance with the invention, said main body element 1 comprises, in correspondence with a longitudinal top edge thereof, a first channel defining portion 11, basically made up of two longitudinally extending walls 11A and 11 B extending upwards from the corresponding edge and defining a longitudinal recess or channel running between a first projection or tab 14 and a second projection or tab 15.

The assembly further comprises a sliding element 3 shaped so as to fit into the channel partly defined by said walls 11A, 11B, so as to be able to slide along said channel. The sliding element 3 is arranged to be pivotably fixed to the end of the pivot rod 4; in use, the sliding element should not perform any axial movement with regard to the pivot rod 4, but merely slide in the channel partly defined by the walls 11A, 11 B.

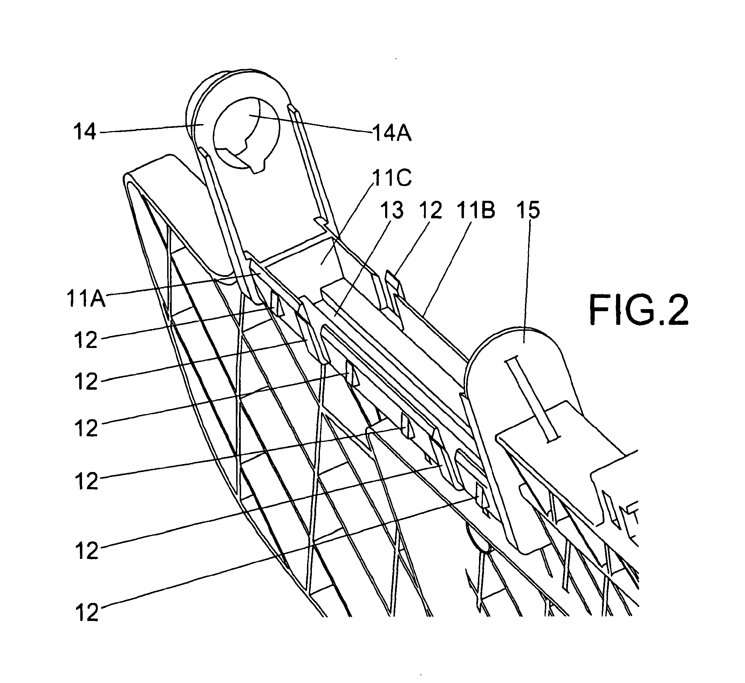

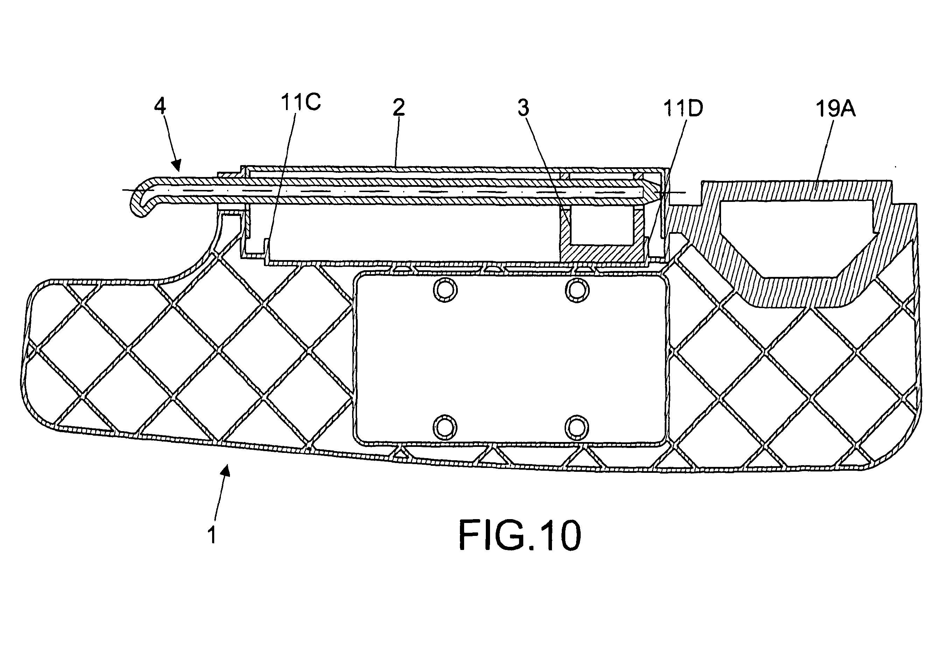

The first channel defining portion of the main body element further comprises two stop elements (11C,11D; cf. figures 2 and 10) consisting in projections arranged to establish limit positions for the axial displacement of the sun visor. In said limit positions, these stop elements 11C and 11D abut against the sliding element 3, thus preventing it from moving further in the corresponding direction. Figure 10 shows the sliding element abutting against the right-most stop element 11D, whereby the sun visor is in its left-most position, corresponding to a minimum axially extended position with regard to the pivot rod 4.

As the amount of axial displacement of the sun visor will thus be determined by these stop elements 11C and 11D, which can be integrally moulded with the main body element, the same cap element can actually be used for sun visor assemblies featuring different amounts of maximum axial displacement. This can be an advantage from a logistic point of view.

The sun visor assembly further comprises a cap element 2, connectable to said main body element 1 in correspondence with said first channel defining portion 11 so that said cap element 2, in combination with said first channel defining portion 11, establishes a channel for housing the sliding element 3. That is, in figure 1, the sliding element will be housed in the channel so that a lower portion of the sliding element will run (in a snug-fitting manner) in the channel defined between the walls 11A, 11B of the main body element (and between the limit positions determined by said stop elements 11C and 11D), whereas the upper portion of the sliding element 3 will be covered (in a snug-fitting manner) by the cap element 2, said cap element 2 having a substantially U-shaped cross section and open ends (23, 24). In this preferred embodiment, the cap element 2 is a single aluminium piece.

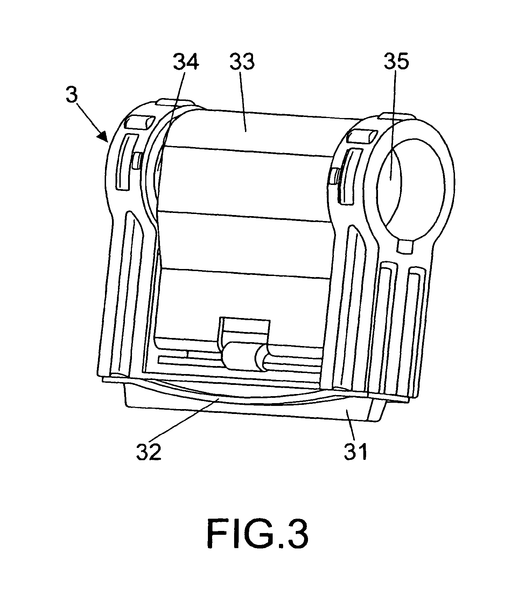

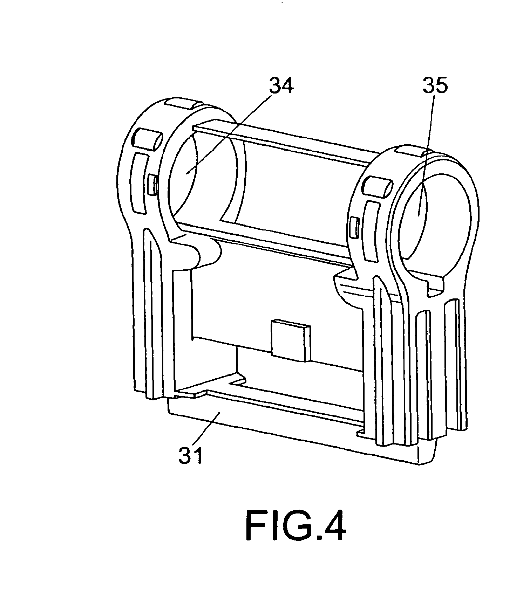

Thus, once the cap element 2 has been fixed to the main body element 1, a substantially closed tubular channel is defined, in which the sliding element 3 can slide between a first position (corresponding to a minimum axial displacement of the main body element with regard to the pivot rod 4) and a second position (corresponding to a maximum axial displacement of the main body element with regard to the pivot rod). The sliding element is attached to the rod by means of inserting the rod first through a through hole 14A (cf. figure 2) in one of the tabs 14 and then through two openings 34, 35 (cf. figures 3 and 4) in the sliding element 3. The end of the pivot rod 4 that is inserted into the openings of the sliding element and stays fixed to the sliding element due to the pressure exerted by the metallic clip 33 on the pivot rod. The assembly comprising the main body element 1, the cap element 2 and the sliding element 3 can be mounted to the pivot rod by simply inserting the pivot rod in the through hole 14A and then pushing the assembly axially along the rod, with a sufficient force.

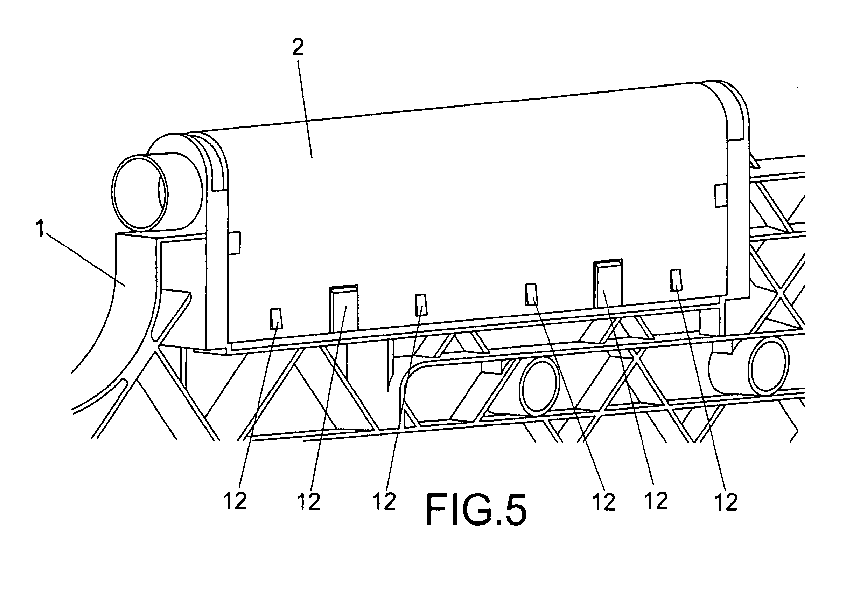

The cap element 2 has a substantially U-shaped cross section and longitudinal end portions or edges 21 arranged to be attached to the main body element by clip fitting. The cap element 2 comprises a plurality of openings 22 and/or recesses arranged along said free longitudinal edges 21 of said cap element 2 and arranged to receive corresponding projections 12 (cf. figure 2) forming part of the main body element 1, for clip fitting the cap element 2 to the main body element 1. Figure 5 shows the cap element 2 clip fitted to the main body element, the projections 12 being visible through said openings in the cap element 2. Of course, for example, as an alternative, there can be holes and/or recesses (also) in the main body element 1, arranged to cooperate with projections in the cap element.

In accordance with this preferred embodiment of the invention, the first channel defining portion includes a longitudinal groove 13 (cf. figure 2) arranged to receive a rib 31 (cf. figures 1, 3 and 4) of the sliding element 3, for snug-fitting guided sliding of said sliding element in the tubular channel established between the first channel defining portion 11 and the cover 2. Said rib 31 can be integrally moulded with a first moulded part (shown in figure 4) of the sliding element, which further comprises the two openings 34, 35 arranged for receiving the pivot rod 4. This moulded part can be a plastic part.

According to this preferred embodiment of the invention, the sliding element 3 further comprises a spring element 32 mounted around the rib 31 (cf. figure 3) and arranged to exert a force against the main body element 1 (namely, against its edge at the area around the groove 13) so as to require a certain minimum force to be exerted by a user for sliding the sliding element 3 along the channel. This spring element can be a metallic spring element.

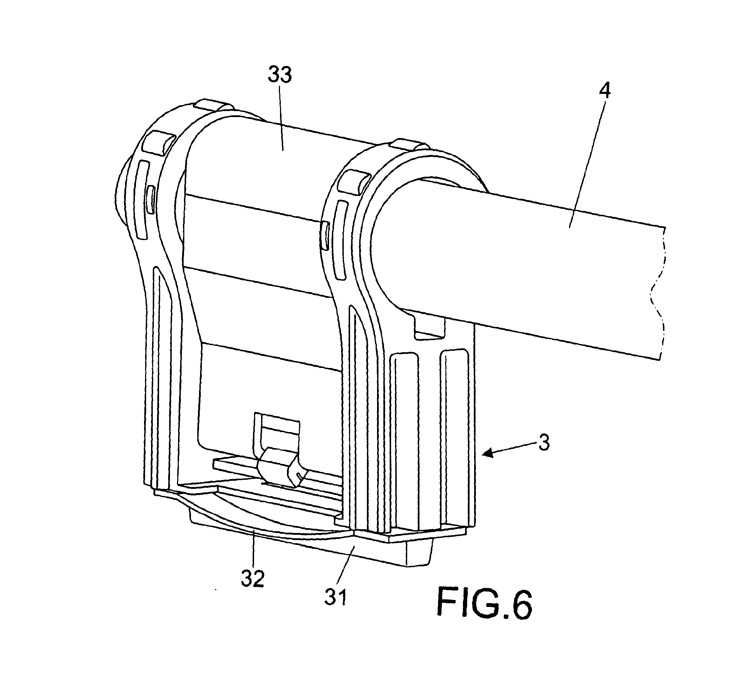

The sliding element 3 further comprises a rod pressure element constituted by a metallic clip 33 arranged to exert pressure on the rod when the sliding element is mounted on the rod, so as to allow the main body element 1 to be selectively positioned and retained in a desired angular position with regard to the pivot rod, by simply pivoting the sliding element 3 around the pivot rod to said angular position. Figure 6 shows the sliding element 3 mounted on the pivot rod 4 (part of the metallic clip 33 is cut away in the figure). The pivot rod can have a cross section with flat portions which may interact with the metallic clip 33 in a conventional manner, establishing certain "stable" positions into which the sunshade body of the sun visor (including the main body element 1 and the sliding element 3) can "snap" when the main body element and the sliding element are pivoted around the pivot rod 4. Further, by means of a suitable design of the pivot rod and a suitable design of the metallic clip 33, the sliding element can be axially fixed to the pivot rod by means of the metallic clip 33, as suggested in figure 6.

Figure 7 shows the assembly with the main body portion 1 in a left-most position corresponding to a minimum axially extended position with regard to the pivot rod 4; here, the end of the pivot rod abuts against the right-most tab 15.

Figure 8 shows the assembly with the main body portion 1 almost in a right-most position corresponding to an almost maximum axially extended position with regard to the pivot rod 4; here, the sliding element 3 almost abuts against the left-most tab 14.

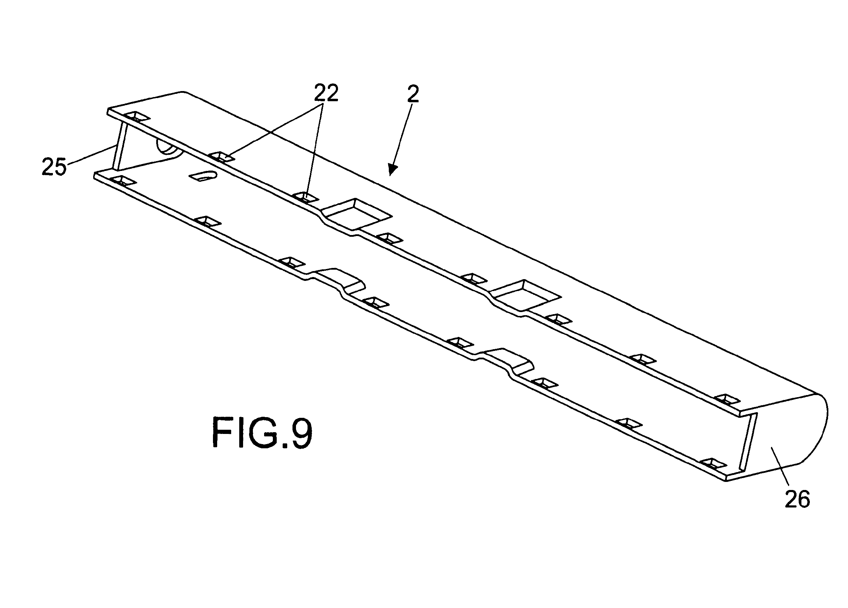

Figure 9 illustrates an alternative embodiment of the cover element 2, according to which the cover element is provided with closed end 25, 26, one of which has a through hole 25A for receiving the pivot rod. If this type of cover element is used, the tabs 14, 15 of the main body element can be dispensed with.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Sun visor assembly for vehicles, comprising:
a main body element (1) corresponding to a sunshade portion of the sun visor, said main body element (1) comprising, in correspondence with a longitudinal top edge thereof, a first channel defining portion (11);and
a cap element (2), connectable to said main body element (1) in correspondence with said first channel defining portion (11) so that said cap element (2), in combination with said first channel defining portion (11), establishes a channel for housing a sliding element (3) connectable to a pivot rod (4) **characterised in that** said sliding element (3) can slide in said channel, between a first position and a second position.

2. Sun visor assembly according to claim 1, **characterised in that** said channel is a substantially tubular channel.

3. Sun visor assembly in accordance with any of the preceding claims, **characterised in that** said main body element (1) is made up of a single moulded element.

4. Sun visor assembly in accordance with claim 3, **characterised in that** said main body element (1) is a plastic element.

5. Sun visor assembly in accordance with any of the preceding claims, **characterised in that** said cap element (2) has a substantially U-shaped cross section and longitudinal end portions (21) arranged to be attached to the main body element (1).

6. Sun visor assembly in accordance with any of the preceding claims, **characterised in that** the cap element (2) is arranged to be attached to the main body element (1) by clip fitting.

7. Sun visor assembly in accordance with claim 6, **characterized in that** the cap element (2) comprises a plurality of openings (22) and/or recesses arranged along free longitudinal edges (21) of said cover element (2) and arranged to receive corresponding projections (12) forming part of the main body element (1) for clip fitting the cover element (2) to the main body element (1).

8. Sun visor assembly in accordance with any of the preceding claims, **characterized in that** said cap element (2) is made up of a single moulded element.

9. Sun visor assembly in accordance with any of the preceding claims, **characterized in that** the cap element (2) is an aluminium element.

10. Sun visor assembly in accordance with any of the preceding claims, **characterized in that** the cap element (2) has open ends (23, 24).

11. Sun visor assembly in accordance with any of the preceding claims, **characterized in that** the cap element (2) has closed ends (25, 26), at least one of said closed ends (25) having a through hole (25A) for receiving the pivot rod.

12. Sun visor assembly in accordance with any of the preceding claims, **characterized in that** the first channel defining portion (11) comprises a bottom portion substantially corresponding to the edge of the main body element (1) and two longitudinal walls (11A, 11B) extending from said edge and defining between them a longitudinal recess for receiving a part of the sliding element (3).

13. Sun visor assembly in accordance with any of the preceding claims, **characterized in that** the first channel defining portion includes a longitudinal groove (13) arranged to receive a rib (31) of the sliding element.

14. Sun visor assembly in accordance with any of the preceding claims, **characterised in that** the first channel defining portion comprises two tab elements (14, 15) provided at opposite ends of the first channel defining portion and arranged to abut against respective lateral ends (23, 24) of the cap element (2) for closing said ends to define a closed channel for movement of the sliding element (3), a first one (14) of said tab elements having a through hole (14A) for receiving the pivot rod (4).

15. Sun visor assembly in accordance with any of the preceding claims, **characterised in that** the first channel defining portion (11) of the main body element further comprises two stop elements (11C, 11 D) arranged to abut against the sliding element in respective limit positions for the axial displacement of the sun visor.

16. Sun visor assembly in accordance with any of the preceding claims, **characterised in that** it further includes the sliding element (3).

17. Sun visor assembly in accordance with claim 16, **characterised in that** said sliding element (3) comprises a first moulded part provided with at least one opening (34, 35) for receiving the pivot rod (4) so as to allow the sliding element (3) to be releasably connected to said pivot rod by means of inserting said pivot rod (4) into said at least one opening (34, 35).

18. Sun visor assembly in accordance with any of claims 16 and 17, **characterised in that** said sliding element (3) further comprises a rib (31) arranged to be inserted in a groove (13) in the channel defining portion (11) of the main body element (1).

19. Sun visor assembly in accordance with any of claims 16-18, **characterised in that** the sliding element (3) further comprises at least one spring element (32) arranged to exert a force against the main body element (1) and/or against the cap element (2), so as to require a certain minimum force to be exerted by a user for sliding the sliding element along the channel.

20. Sun visor assembly according to any of claims 16-19, **characterised in that** the sliding element (3) further comprises a rod pressure element (33) arranged to exert pressure on the rod when the sliding element is mounted on the rod, so as to allow the main body element (1) to be selectively positioned and retained in one of a plurality of angular positions with regard to the pivot rod, by means of pivoting the sliding element (3) around the pivot rod to a corresponding angular position.

21. Sun visor assembly according to claim 20, **characterised in that** the rod pressure element (33) is a metallic clip.

22. Sun visor assembly according to any of the preceding claims, **characterised in that** it further includes the pivot rod (4).

23. Sun visor, made up of a sun visor assembly in accordance with any of the preceding claims.

24. Sun visor in accordance with claim 23, **characterised in that** the main body element (1) comprises a grid-shaped portion (16) covered by a non-translucent material so as to provide for a main sunshade portion of the sun visor.

## Patentansprüche

1. Sonnenblendenaufbau für Fahrzeuge, umfassend:
ein Hauptkörperelement (1), das einem Sonnenblendenabschnitt der Sonnenblende entspricht, wobei das Hauptkörperelement (1) entsprechend seiner längslaufenden Oberkante einen ersten Kanal definierenden Abschnitt (11) umfasst; und
ein Kappenelement (2), das mit dem Hauptkörperelement (1) in Übereinstimmung mit dem den ersten Kanal definierenden Abschnitt (11) verbindbar ist, sodass das Kappenelement (2) in Kombination mit dem den ersten Kanal definierenden Abschnitt (11) einen Kanal zum Aufnehmen eines Schieberelements (3) bildet, das mit einem Schwenkstab (4) verbindbar ist, sodass das Schieberelement (3) in dem Kanal zwischen einer ersten Position und einer zweiten Position verschiebbar ist.

2. Sonnenblendenaufbau nach Anspruch 1, bei dem der Kanal ein im Wesentlichen röhrenförmiger Kanal ist.

3. Sonnenblendenaufbau nach einem der vorstehenden Ansprüche, bei dem das Hauptkörperelement (1) aus einem einzigen gegossenen Element aufgebaut ist.

4. Sonnenblendenaufbau nach Anspruch 3, bei dem das Hauptkörperelement (1) ein Kunststoffelement ist.

5. Sonnenblendenaufbau nach einem der vorstehenden Ansprüche, bei dem das Kappenelement (2) einen im Wesentlichen U-förmigen Querschnitt und längslaufenden Endabschnitte (21), die zur Befestigung am Hauptkörperelement ausgebildet sind, aufweist.

6. Sonnenblendenaufbau nach einem der vorstehenden Ansprüche, bei dem das Kappenelement (2) zur Befestigung am Hauptkörperelement (1) durch eine Klippbefestigung ausgebildet ist.

7. Sonnenblendenaufbau nach Anspruch 6, bei dem das Kappenelement (2) mehrere Öffnungen (22) und/oder Vertiefungen, die entlang der freien längslaufenden Kanten (21) des Deckelelements (2) angeordnet sind und ausgebildet sind, um entsprechende Vorsprünge (12), die einen Teil des Hauptkörperelements (1) bilden, aufzunehmen, um das Deckelelement (2) auf das Hauptkörperelement (1) zu klippsen.

8. Sonnenblendenaufbau nach einem der vorstehenden Ansprüche, bei dem das Kappenelement (2) aus einem einzigen gegossenen Element aufgebaut ist.

9. Sonnenblendenaufbau nach einem der vorstehenden Ansprüche, bei dem das Kappenelement (2) ein Aluminiumelement ist.

10. Sonnenblendenaufbau nach einem der vorstehenden Ansprüche, bei dem das Kappenelement (2) offene Enden (23, 24) aufweist.

11. Sonnenblendenaufbau nach einem der vorstehenden Ansprüche, bei dem das Kappenelement (2) geschlossene Enden (25, 26) aufweist, wobei wenigstens eines der geschlossenen Enden (25) ein Durchgangsloch (25A) aufweist, um den Schwenkstab aufzunehmen.

12. Sonnenblendenaufbau nach einem der vorstehenden Ansprüche, bei dem der den ersten Kanal bildende Abschnitt (11) einen Bodenabschnitt, der im Wesentlichen der Kante des Hauptkörperelements (1) entspricht, und zwei längslaufende Wände (11A, 11B), die sich von der besagten Kante erstrecken und zwischen denen eine längslaufende Vertiefung zur Aufnahme eines Teils des Schieberelements (3) definiert ist, umfasst.

13. Sonnenblendenaufbau nach einem der vorstehenden Ansprüche, bei dem der den ersten Kanal definierende Abschnitt eine längslaufende Nut (13) umfasst, die ausgebildet ist, um eine Rippe (31) des Schieberelements aufzunehmen.

14. Sonnenblendenaufbau nach einem der vorstehenden Ansprüche, bei dem der den ersten Kanal definierende Abschnitt zwei Laschenelemente (14, 15) umfasst, die an entgegengesetzten Seiten des den ersten Kanal definierenden Abschnitts vorgesehen sind und ausgebildet sind, um an entsprechenden seitlichen Enden (23, 24) des Kappenelements (2) anzuliegen, um die Enden zu verschließen und einen geschlossenen Kanal zur Bewegung des Schieberelements (3) zu definieren, wobei ein erstes (14) der Laschenelemente ein Durchgangsloch (14A) zum Aufnehmen des Schwenkstabs (4) aufweist.

15. Sonnenblendenaufbau nach einem der vorstehenden Ansprüche, bei dem der den ersten Kanal definierende Abschnitt (11) des Hauptkörperelements ferner zwei Anschlagelemente (11C, 11D) umfasst, die ausgebildet sind, um in entsprechenden Endpositionen des axialen Versatzes der Sonnenblende am Schieberelement anzuliegen.

16. Sonnenblendenaufbau nach einem der vorstehenden Ansprüche, ferner umfassend das Schieberelement (3).

17. Sonnenblendenaufbau nach Anspruch 16, bei dem das Schieberelement (3) einen ersten gegossenen Teil umfasst, der mit wenigstens einer Öffnung (34, 35) zum Aufnehmen des Schwenkstabes (4) versehen ist, um es dem Schieberelement (3) zu gestatten, mittels des Einführens des Schwenkstabes (4) in die wenigstens eine Öffnung (34, 35) lösbar mit dem Schwenkstab verbunden zu werden.

18. Sonnenblendenaufbau nach einem der Ansprüche 16 und 17, bei dem das Schieberelement (3) ferner eine Rippe (31) umfasst, die angeordnet ist, um in eine Nut (13) in dem den Kanal definierenden Abschnitt (11) des Hauptkörperelements (1) eingeführt zu werden.

19. Sonnenblendenaufbau nach einem der vorstehenden Ansprüche 16 bis 18, bei dem das Schieberelement (3) ferner wenigstens ein Federelement (32) umfasst, das ausgebildet ist, um eine Kraft auf das Hauptkörperelement (1) und/oder das Kappenelement (2) auszuüben, sodass eine gewisse Minimalkraft vom Verwender aufgebracht werden muss, um das Schieberelement entlang des Kanals zu verschieben.

20. Sonnenblendenaufbau nach einem der vorstehenden Ansprüche 16 bis 19, bei dem das Schieberelement (3) ferner ein Stabdruckelement (33) umfasst, das ausgebildet ist, um einen Druck auf den Stab auszuüben, wenn das Schieberelement an dem Stab angebracht ist, um es zu gestatten das Hauptkörperelement (1) durch Verschwenken des Schieberelements (3) um den Schwenkstab in eine entsprechende Winkelposition in Bezug auf den Schwenkstab selektiv zu positionieren und in einer der mehreren Winkelpositionen zu halten.

21. Sonnenblendenaufbau nach Anspruch 20, bei dem das Stabdruckelement (33) ein Metallklipp ist.

22. Sonnenblendenaufbau nach einem der vorstehenden Ansprüche, ferner umfassend den Schwenkstab (4).

23. Sonnenblende aufgebaut aus einem Sonnenblendenaufbau gemäß einem der vorstehenden Ansprüche.

24. Sonnenblende nach Anspruch 23, bei dem das Hauptkörperelement (1) einen gitterförmigen Abschnitt (16) umfasst, der von einem lichtundurchlässigen Material bedeckt ist, um so einen Hauptsonnenblendenabschnitt der Sonnenblende zu schaffen.

## Revendications

1. Ensemble pare-soleil pour véhicules, comprenant :
un élément de corps principal (1) correspondant à une partie d'ombrage du pare-soleil, ledit élément de corps principal (1) comprenant, en correspondance avec un bord supérieur longitudinal de celui-ci, une première partie définissant un canal (11) ; et
un élément de coiffe (2) pouvant être raccordé audit élément de corps principal (1) en correspondance avec ladite première partie définissant un canal (11) de sorte que ledit élément de coiffe (2), en combinaison avec ladite première partie définissant un canal (11), établit un canal pour loger un élément coulissant (3) pouvant être raccordé à une tige de pivotement (4), **caractérisé en ce que** ledit élément coulissant (3) peut coulisser dans ledit canal, entre une première position et une deuxième position.

2. Ensemble pare-soleil selon la revendication 1, **caractérisé en ce que** ledit canal est un canal sensiblement tubulaire.

3. Ensemble pare-soleil selon l'une quelconque des revendications précédentes, **caractérisé en ce que** ledit élément de corps principal (1) est constitué d'un élément moulé unique.

4. Ensemble pare-soleil selon la revendication 3, **caractérisé en ce que** ledit élément de corps principal (1) est un élément en plastique.

5. Ensemble pare-soleil selon l'une quelconque des revendications précédentes, **caractérisé en ce que** ledit élément de coiffe (2) a une section transversale sensiblement en forme de U et des parties d'extrémité longitudinales (21) agencées de manière à être attachées à l'élément de corps principal (1).

6. Ensemble pare-soleil selon l'une quelconque des revendications précédentes, **caractérisé en ce que** l'élément de coiffe (2) est agencé de manière à être attaché à l'élément de corps principal (1) par un mécanisme d'enclipsage.

7. Ensemble pare-soleil selon la revendication 6, **caractérisé en ce que** l'élément de coiffe (2) comprend une pluralité d'ouvertures (22) et/ou d'évidements agencés le long de bords longitudinaux libres (21) dudit élément de recouvrement (2) et agencés de manière à recevoir des saillies correspondantes (12) faisant partie de l'élément de corps principal (1) pour fixer par enclipsage l'élément de recouvrement (2) à l'élément de corps principal (1).

8. Ensemble pare-soleil selon l'une quelconque des revendications précédentes, **caractérisé en ce que** ledit élément de coiffe (2) est constitué d'un élément moulé unique.

9. Ensemble pare-soleil selon l'une quelconque des revendications précédentes, **caractérisé en ce que** l'élément de coiffe (2) est un élément en aluminium.

10. Ensemble pare-soleil selon l'une quelconque des revendications précédentes, **caractérisé en ce que** l'élément de coiffe (2) a des extrémités ouvertes (23, 24).

11. Ensemble pare-soleil selon l'une quelconque des revendications précédentes, **caractérisé en ce que** l'élément de coiffe (2) a des extrémités fermées (25, 26), au moins l'une desdites extrémités fermées (25) ayant un trou de passage (25A) pour recevoir la tige de pivotement.

12. Ensemble pare-soleil selon l'une quelconque des revendications précédentes, **caractérisé en ce que** la première partie définissant un canal (11) comprend une partie inférieure correspondant sensiblement au bord de l'élément de corps principal (1) et deux parois longitudinales (11A, 11B) s'étendant depuis ledit bord et définissant entre elles un évidement longitudinal pour recevoir une partie de l'élément coulissant (3).

13. Ensemble pare-soleil selon l'une quelconque des revendications précédentes, **caractérisé en ce que** la première partie définissant un canal comprend une rainure longitudinale (13) agencée de manière à recevoir une nervure (31) de l'élément coulissant.

14. Ensemble pare-soleil selon l'une quelconque des revendications précédentes, **caractérisé en ce que** la première partie définissant un canal comprend deux pattes (14, 15) agencées aux extrémités opposées de la première partie définissant un canal et agencées de manière à venir en butée contre des extrémités latérales respectives (23, 24) de l'élément de coiffe (2) pour fermer lesdites extrémités de manière à définir un canal fermé pour le mouvement de l'élément coulissant (3), une première (14) desdites pattes ayant un trou de passage (14A) destiné à recevoir la tige de pivotement (4).

15. Ensemble pare-soleil selon l'une quelconque des revendications précédentes, **caractérisé en ce que** la première partie définissant un canal (11) de l'élément de corps principal comprend en outre deux éléments d'arrêt (11C, 11D) agencés de manière à venir en butée contre l'élément coulissant dans des positions de limitation respectives pour le déplacement axial du pare-soleil.

16. Ensemble pare-soleil selon l'une quelconque des revendications précédentes, **caractérisé en ce qu'**il comprend en outre l'élément coulissant (3).

17. Ensemble pare-soleil selon la revendication 16, **caractérisé en ce que** ledit élément coulissant (3) comprend une première partie moulée munie d'au moins une ouverture (34, 35) pour recevoir la tige de pivotement (4) de manière à permettre à l'élément coulissant (3) d'être raccordé de manière amovible à ladite tige de pivotement en insérant ladite tige de pivotement (4) dans ladite au moins une ouverture (34, 35).

18. Ensemble pare-soleil selon l'une quelconque des revendications 16 et 17, **caractérisé en ce que** ledit élément coulissant (3) comprend en outre une nervure (31) agencée de manière à être insérée dans une rainure (13) dans la partie définissant un canal (11) de l'élément de corps principal (1).

19. Ensemble pare-soleil selon l'une quelconque des revendications 16 à 18, **caractérisé en ce que** l'élément coulissant (3) comprend en outre au moins un élément de ressort (32) agencé de manière à exercer une force contre l'élément de corps principal (1) et/ou contre l'élément de coiffe (2), de manière à ce qu'une certaine force minimale soit nécessairement exercée par un utilisateur pour faire coulisser l'élément coulissant le long du canal.

20. Ensemble pare-soleil selon l'une quelconque des revendications 16 à 19, **caractérisé en ce que** l'élément coulissant (3) comprend en outre un élément de pression de tige (33) agencé de manière à exercer une pression sur la tige lorsque l'élément coulissant est monté sur la tige, afin de permettre à l'élément de corps principal (1) d'être positionné de manière sélective et retenu dans l'une d'une pluralité de positions angulaires par rapport à la tige de pivotement, au moyen d'un pivotement de l'élément coulissant (3) autour de la tige de pivotement vers une position angulaire correspondante.

21. Ensemble pare-soleil selon la revendication 20, **caractérisé en ce que** l'élément de pression de tige (33) est une pince métallique.

22. Ensemble pare-soleil selon l'une quelconque des revendications précédentes, **caractérisé en ce qu'**il comprend en outre la tige de pivotement (4).

23. Pare-soleil constitué d'un ensemble pare-soleil selon l'une quelconque des revendications précédentes.

24. Pare-soleil selon la revendication 23, **caractérisé en ce que** l'élément de corps principal (1) comprend une partie en forme de grille (16) recouverte d'un matériau non translucide de manière à servir de partie d'ombrage principale du pare-soleil.
